# EUROPEAN PATENT APPLICATION

(11) **EP 4 566 921 A1**
(43) Date of publication of application: **11.06.2025**
(21) Application number: 23849366.2
(22) Date of filing: 31.07.2023
(51) Int. Cl.: B62D 21/15

(54) **FRONT COMPARTMENT STRUCTURE OF SEPARATE FRAME CONSTRUCTION, SEPARATE FRAME CONSTRUCTION AND VEHICLE**

(30) Priority: 01.08.2022 CN 202210918479
(71) Applicant: BYD Company Limited, Shenzhen, Guangdong 518118 (CN)
(72) Inventor: YI, Bengang, Shenzhen, Guangdong 518118 (CN); TIAN, Hongsheng, Shenzhen, Guangdong 518118 (CN); LAI, Nan, Shenzhen, Guangdong 518118 (CN); MAO, Lizhong, Shenzhen, Guangdong 518118 (CN); CHENG, Chen, Shenzhen, Guangdong 518118 (CN)
(74) Representative: Mathys & Squire
(86) International application number: PCT/CN2023/110318
(87) International publication number: WO 2024/027659

(57) **Abstract**

A front compartment structure of a separate frame construction, a separate frame construction and a vehicle. The front compartment structure of a separate frame construction comprises an A-pillar, a wheel housing upper side rail, a water tank lower cross rail and a trunk rail, wherein one end of the wheel housing upper side rail is connected to the A-pillar, and one end of the trunk rail is connected to the other end of the wheel housing upper side rail, and the other end thereof is connected to the water tank lower cross rail.

## Description

### CROSS-REFERENCE TO RELATED APPLICATIONS

The present disclosure claims priority to Chinese Patent Application No. 202210918479.1, filed on August 1, 2022 and entitled "FRONT COMPARTMENT STRUCTURE OF BODY-ON-FRAME CONSTRUCTION, BODY-ON-FRAME CONSTRUCTION, AND VEHICLE". The entire content of the above-referenced application is incorporated herein by reference.

### FIELD

The present disclosure relates to the technical field of vehicles, and more specifically, to a front compartment structure of a body-on-frame construction, a body-on-frame construction, and a vehicle.

### BACKGROUND

With the development of science and technology, vehicle weights of some types of vehicles have increased. For example, to enable electric vehicles to match or even surpass the endurance mileage of existing fuel vehicles, they need to be equipped with relatively large power batteries. Therefore, compared with a fuel vehicle of the same specification, a vehicle weight of the electric vehicle is greatly increased. In addition, in some models of trucks, buses, and off-road vehicles, body-on-frame constructions with independent frames are usually adopted. Such frames can provide strong vehicle body rigidity, increasing the vehicle body strength, but the same time the body-on-frame constructions also result in heavier weights.

The increase in the vehicle weight leads to an increase in kinetic energy of a vehicle in an initial stage of a crash under the same test condition, thereby resulting in a need to absorb more impact energy during the crash. In the related art, a front compartment structure of the vehicle body has a limited effect on absorbing the impact energy, so that the vehicle has a relatively large safety risk. Therefore, there is an urgent need to design a front compartment structure of the vehicle body that can absorb more impact energy.

### SUMMARY

The present disclosure provides new technical solutions for a front compartment structure of a body-on-frame construction, a body-on-frame construction, and a vehicle.

According to a first aspect of the present disclosure, a front compartment structure of a body-on-frame construction is provided, which includes:
an A-pillar, a wheel housing upper side beam, a radiator lower cross beam, and a trunk beam.

One end of the wheel housing upper side beam is connected to the A-pillar.

One end of the trunk beam is connected to another end of the wheel housing upper side beam, and another end of the trunk beam is connected to the radiator lower cross beam.

In some embodiments, the wheel housing upper side beam and the trunk beam are integrally formed.

In some embodiments, the wheel housing upper side beam and the trunk beam are split structures. The trunk beam is connected to the wheel housing upper side beam by welding.

In some embodiments, the trunk beam includes an inner plate and an outer plate. The inner plate and the outer plate form an enclosed cavity structure.

In some embodiments, the trunk beam has an extension portion and a connecting portion. The extension portion and the connecting portion are arranged in an L shape.

In some embodiments, the connecting portion is provided with an end surface facing the ground. The end surface is provided with a frame mounting structure for connecting with a frame.

In some embodiments, the front compartment structure of a body-on-frame construction further includes a dashboard cross beam. Two ends of the dashboard cross beam are respectively connected to the A-pillars on two sides of a vehicle body.

In some embodiments, in a width direction of the vehicle body, a length of the radiator lower cross beam is less than a length of the dashboard cross beam.

According to a second aspect of the present disclosure, a body-on-frame construction is provided, which includes:
a frame and the front compartment structure described in the first aspect. The trunk beam is provided with a frame mounting structure. The frame is connected to the front compartment structure through the frame mounting structure.

According to a third aspect of the present disclosure, a vehicle is provided, which includes the body-on-frame construction described in the second aspect.

According to an embodiment of the present disclosure, in the present disclosure, the trunk beam is arranged on and connected to another end of the wheel housing upper side beam connected to the A-pillar, and the trunk beam is enabled to connect to the radiator lower cross beam. Therefore, when the vehicle is in a collision, an impact force can be directly transmitted to the trunk beam through the radiator lower cross beam, is partially absorbed through the trunk beam, and then is transmitted to the A-pillar through the wheel housing upper side beam. In this way, the impact energy is transmitted to the body-on-frame construction through the A-pillar for dispersion and absorption, which reduces an energy intrusion amount of a passenger compartment of the vehicle, and improves safety performance of the vehicle.

Other features and advantages of the present disclosure become apparent through the following detailed description of exemplary embodiments of the present disclosure with reference to the drawings.

### BRIEF DESCRIPTION OF THE DRAWINGS

The drawings that are incorporated into and constitute a part of this specification illustrate embodiments of the present disclosure, and are used for explaining the principle of the present disclosure together with the description.
FIG. 1 is a schematic structural diagram of a front compartment structure of a body-on-frame construction according to the present disclosure;
FIG. 2 is a side view of FIG. 1;
FIG. 3 is a bottom view of FIG. 1;
FIG. 4 is a partial enlarged view of a part A in FIG. 3; and
FIG. 5 is a schematic diagram of a forward impact force transmission path of a body-on-frame construction according to the present disclosure.

In the drawings:
1. A-pillar; 2. Wheel housing upper side beam; 3. Radiator lower cross beam; 4. Trunk beam; 41. Inner plate; 42. Outer plate; 43. Extension portion; 44. Connecting portion; 45. End surface; 5. Dashboard cross beam; 6. Frame.

### DETAILED DESCRIPTION

Various exemplary embodiments of the present disclosure are described in detail with reference to the drawings. It should be noted that, unless otherwise specified, relative arrangement, numerical expressions, and numerical values of components and steps described in the embodiments do not limit the scope of the present disclosure.

The following description of at least one exemplary embodiment is actually merely illustrative, and in no way constitute any limitation on the present disclosure and application or use thereof.

Technologies, methods, and devices known to a person of ordinary skill in the related art may not be discussed in detail, but where appropriate, the techniques, the methods, and the devices should be considered as part of the specification.

In all examples shown and discussed herein, any specific value should be construed as merely exemplary and not as a limitation. Therefore, other examples of the exemplary embodiments may have different values.

It should be noted that, similar reference numerals and letters denote similar items in the drawings below. Therefore, once an item is defined in a drawing, the item does not need to be further discussed in subsequent drawings.

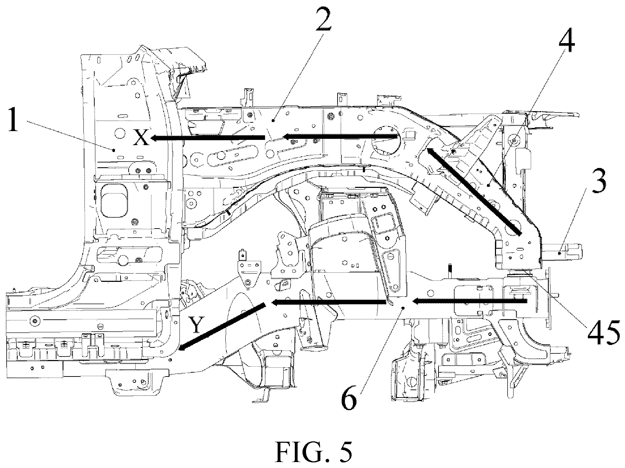

In the related art, a front compartment structure of a vehicle mainly relies on a frame 6 to provide safety protection (refer to a path Y in FIG. 5) in various crash conditions. A vehicle body part mainly absorbs energy through structures such as a front bumper assembly, an engine compartment, and a wheel housing assembly, resulting in insufficient energy absorption of the vehicle body part under an Insurance Institute for Highway Safety (IIHS) 25% small overlap frontal crash condition.

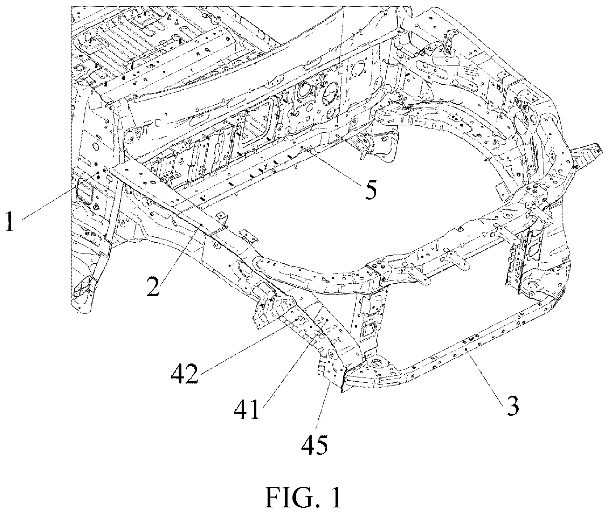

According to FIG. 1 to FIG. 5, to resolve the above problem, the present disclosure provides a front compartment structure of a body-on-frame construction, which includes an A-pillar 1, a wheel housing upper side beam 2, a radiator lower cross beam 3, and a trunk beam 4. One end of the wheel housing upper side beam 2 is connected to the A-pillar 1. One end of the trunk beam 4 is connected to another end of the wheel housing upper side beam 2. Another end of the trunk beam 4 is connected to the radiator lower cross beam 3.

Specifically, as shown in FIG. 1, in the present disclosure, the trunk beam 4 is arranged on the front compartment structure of a body-on-frame construction, to directly connect the wheel housing upper side beam 2 to the radiator lower cross beam 3. In some embodiments, the wheel housing upper side beam 2 is located above a wheel housing of a vehicle, may be integrally connected to the wheel housing, or may not be integrally connected to the wheel housing. Specifically, the wheel housing may be designed according to an actual structure of a vehicle, which is not limited in the present disclosure. However, the radiator lower cross beam 3 can be configured to fix a radiator, to achieve a function such as engine cooling. The radiator lower cross beam is usually located on a front end of the vehicle, to directly bear a forward impact force of the vehicle.

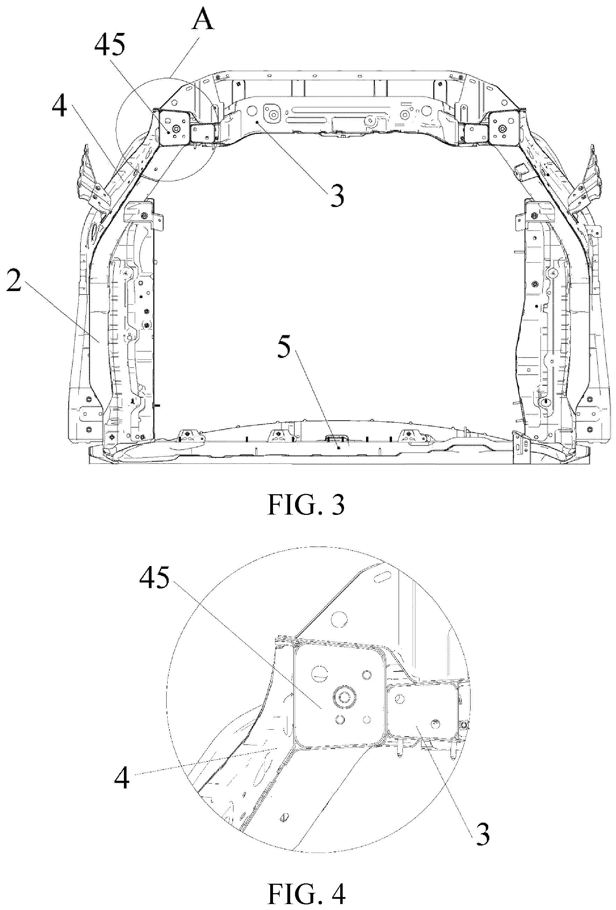

In the above structure, one end of the wheel housing upper side beam 2 is connected to the A-pillar 1, and another end thereof is connected to the trunk beam 4. Therefore, when the vehicle is subject to a crash, an impact force can be directly transmitted to a structure of the trunk beam 4 through the radiator lower cross beam 3, is partially absorbed through the structure of the trunk beam 4, and then is transmitted to the A-pillar 1 through the wheel housing upper side beam 2. In this way, the impact energy is transmitted to the body-on-frame construction through the A-pillar 1 for dispersion and absorption. A dashboard structure is usually further connected between the two A-pillars 1 of the vehicle, and the front compartment structure of a body-on-frame construction is formed as an enclosed frame structure by connecting the dashboard structure, the A-pillar 1, the wheel housing upper side beam 2, the trunk beam 4, and the radiator lower cross beam 3, as shown in FIG. 3, which effectively improves structural stiffness of a vehicle body.

In various crash conditions, in the above enclosed frame structure, the trunk beam 4 exactly faces a collision zone of the IIHS small overlap frontal crash, which makes up for a shortcoming that an energy absorbing structure of a conventional front compartment is not involved in a crash under an IIHS 25% small overlap frontal crash condition, and also provides an effective impact force transmission path (referring to a path X in FIG. 5) for frontal crash processes such as a frontal crash, a 50% overlap frontal crash, and a 25% small overlap frontal crash. Therefore, the impact force absorbs part of the energy through the trunk beam 4, is transmitted backward to the A-pillar 1, and then is dispersed on the vehicle body. In this way, an intrusion amount of the impact energy for a passenger compartment is reduced, crash safety of the body-on-frame construction is improved, and safety of the passenger compartment is effectively guaranteed while a lightweight design is performed.

In some embodiments, the wheel housing upper side beam 2 and the trunk beam 4 are integrally formed.

Specifically, in this embodiment, the wheel housing upper side beam 2 and the trunk beam 4 may be designed as the integrally formed, which can not only omit a connection step of the wheel housing upper side beam 2 and the trunk beam 4, reduce a quantity of components of the vehicle, and improve an integration of the vehicle, but also further improve stability of the entire front compartment structure.

In some embodiments, the wheel housing upper side beam 2 and the trunk beam 4 are split structures. The trunk beam 4 is connected to the wheel housing upper side beam 2 by welding.

Specifically, refer to FIG. 1 to FIG. 3, in this embodiment, the trunk beam 4 and the wheel housing upper side beam 2 each may be made of a metal material such as a steel plate, and are connected by welding. In an embodiment, the wheel housing upper side beam 2 may be designed to be parallel to a ground. One end of the trunk beam 4 is connected to the wheel housing upper side beam 2. Another end thereof may extend downward and forward and be connected to the radiator lower cross beam 3. When the vehicle is subject to the crash, the trunk beam 4 and the wheel housing upper side beam 2 have different extension direction, and a joint thereof is subjected to a relatively large force and is susceptible to fracture or deformation. The trunk beam and the wheel housing upper side beam are connected together by welding, which can improve stiffness of the front compartment structure. In addition, the welding connection process is relatively mature, which helps improve production efficiency.

In some embodiments, the trunk beam 4 includes an inner plate 41 and an outer plate 42. The inner plate 41 and the outer plate 42 form an enclosed cavity structure.

Specifically, as shown in FIG. 1, a structure of the trunk beam 4 adopts the outer plate 42 and the inner plate 41 to form the enclosed cavity structure, which further improves structural stiffness of the front compartment structure. The structural form of the inner plate 41 and the outer plate 42 not only may try to not increase a weight of the trunk beam while improve the stiffness of the structure of the trunk beam 4, but also facilitates process of the structure of the trunk beam 4. For example, splicing connection is performed by a steel plate through welding.

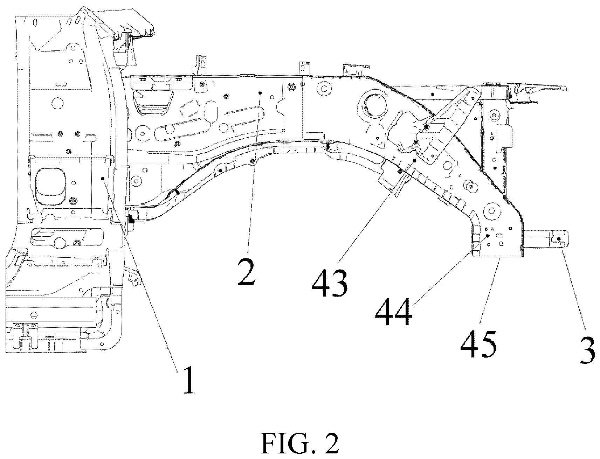

In some embodiments, as shown in FIG. 1 and FIG. 2, the trunk beam 4 has an extension portion 43 and a connecting portion 44. The extension portion 43 and the connecting portion 44 are arranged in an L shape.

Specifically, the connecting portion 44 is provided with an end surface 45 facing the ground. The end surface 45 is provided with a frame mounting structure for connecting with a frame 6.

Specifically, in the conventional front compartment structure of the vehicle body, to perform impact energy absorption as much as possible, a structural size of wheel housing assemblies on two sides of a front compartment is designed to be relatively large with relatively many structural beams. In this way, the vehicle body occupies a relatively large space of the front compartment, a space of the front compartment is relatively small, and the front compartment structure is relatively complicated. However, in this embodiment, the connecting portion 44 of the trunk beam 4 (to be specific, located at a front end of the vehicle body) can extend to a direction facing the ground, and is fixedly mounted to the frame 6 by the frame mounting structure arranged on the end surface 45, as shown in FIG. 1 to FIG. 4. In the present disclosure, the end surface 45 facing the ground may not be limited to exactly facing the ground, or may be that the end surface 45 forms a specific included angle with the ground, which may be selected according to a mounting form of the frame 6.

The frame 6 is mounted through the frame mounting structure arranged on the end surface 45 of the connecting portion 44 of the trunk beam 4, which omits a component such as a front connecting plate configured to mount the frame 6 arranged in the conventional front compartment structure, and simplifies the complex front compartment structure. In this way, integration of components is higher, occupancy of the front compartment space by the vehicle body is reduced, and an impact energy absorption space of the vehicle in a form of the body-on-frame construction is indirectly increased.

In an embodiment, the frame mounting structure may be multiple mounting holes (that is, a first row of mounting points of the frame 6). The frame 6 is securely connected by extending into the mounting holes through connecting beams such as bolts. In this way, the frame 6 is directly connected to the front compartment structure, which effectively improves dynamic stiffness at the end surface 45 of the connecting portion 44 of the trunk beam 4 and the frame 6, thereby increasing the structural stiffness of the vehicle body.

In some embodiments, the front compartment structure of a body-on-frame construction further includes a dashboard cross beam 5. Two ends of the dashboard cross beam 5 are respectively connected to the A-pillars 1 on two sides of the vehicle body.

Specifically, in this embodiment, the front compartment structure includes the dashboard cross beam 5, and two ends thereof are respectively connected to the two A-pillars 1 of the vehicle. Therefore, when the vehicle is subject to the crash, the impact energy can be effectively dispensed, which further improves overall stiffness of the front compartment structure of the vehicle body.

In some embodiments, in a width direction of the vehicle body, a length of the radiator lower cross beam 3 is less than a length of the dashboard cross beam 5.

Specifically, as shown in FIG. 3, in this embodiment, the length of the radiator lower cross beam 3 is less than the length of the dashboard cross beam 5. To be specific, the trunk beam 4 extends toward an inner side of the vehicle while extending downward and forward. In this way the trunk beam 4 and the radiator lower cross beam 3 form an enclosed frame similar to a trapezoid with the dashboard cross beam 5 of the vehicle, which not only improves structural stability of the front compartment structure, but also satisfies an appearance requirement for the front compartment of the vehicle.

According to a second aspect of the present disclosure, a body-on-frame construction is provided, which includes a frame 6 and the front compartment structure described in the first aspect. The trunk beam 4 is provided with a frame mounting structure. The frame 6 is connected to the front compartment structure through the frame mounting structure.

Specifically, in this embodiment, the body-on-frame construction includes the frame 6. The frame 6 is directly connected to the front compartment frame through the frame mounting structure on the trunk beam 4. Therefore, when the vehicle is subjected to a forward impact force, not only can the force be transmitted to the trunk beam 4, the wheel housing upper side beam 2, and the A-pillar 1 in sequence through the radiator lower cross beam 3, and is finally dispersed and absorbed through the vehicle body (refer to an X force transmission path in FIG. 5), but also the force can be transmitted to the trunk beam 4 and the frame 6 in sequence through the radiator lower cross beam 3 for dispersion and absorption (refer to a Y force transmission path in FIG. 5). In this way, the absorption of the impact energy by the vehicle body is improved, so that safety performance of the vehicle body is higher.

According to a third aspect of the present disclosure, a vehicle is provided, which includes the above body-on-frame construction.

Specifically, in this embodiment, in a vehicle assembled by the body-on-frame construction provided in the second aspect of the present disclosure, the wheel housing upper side beam 2 thereof is directly connected to the radiator lower cross beam 3 through the trunk beam 4, and the frame 6 thereof is connected to the front compartment structure through the trunk beam 4. Compared with a conventional vehicle, the front connecting plate configured to connect to the frame 6 is omitted, the front compartment structure of the vehicle is simplified, and the space at the front compartment of the vehicle is increased. In addition, the trunk beam 4 exactly faces the collision zone of the IIHS small overlap frontal crash, which makes up for a shortcoming that an energy absorption structure of the conventional front compartment is not involved in a crash under the IIHS 25% small overlap frontal crash condition, and also provides an effective impact force transmission path (referring to a path X in FIG. 5) for frontal crash processes such as a frontal crash, a 50% overlap frontal crash, and a 25% small overlap frontal crash, which improves safety performance of the vehicle.

The above embodiments focus on the differences between the embodiments. The embodiments may be combined into more optimal embodiments as long as the different optimization features of the embodiments are not contradictory. For brevity, the details are not described herein.

Although some specific embodiments of the present disclosure have been described in detail by way of examples, a person skilled in the art should understand that the above examples are merely for description and are not intended to limit the scope of the present disclosure. A person skilled in the art should understand that modifications may be made to the above embodiments without departing from the scope and spirit of the present disclosure. The scope of the present disclosure is defined by the appended claims.

## Claims

1. A front compartment structure of a body-on-frame construction, comprising:
an A-pillar;
a wheel housing upper side beam, one end of the wheel housing upper side beam being connected to the A-pillar.
a radiator lower cross beam; and
a trunk beam, one end of the trunk beam being connected to another end of the wheel housing upper side beam, and another end of the trunk beam being connected to the radiator lower cross beam.

2. The front compartment structure of a body-on-frame construction according to claim 1, wherein the wheel housing upper side beam and the trunk beam are integrally formed.

3. The front compartment structure of a body-on-frame construction according to claim 1, wherein the wheel housing upper side beam and the trunk beam are split structures; and the trunk beam is connected to the wheel housing upper side beam by welding.

4. The front compartment structure of a body-on-frame construction according to claim 3, wherein the trunk beam comprises an inner plate and an outer plate; and the inner plate and the outer plate form an enclosed cavity structure.

5. The front compartment structure of a body-on-frame construction according to claim 4, wherein the trunk beam has an extension portion and a connecting portion; and the extension portion and the connecting portion are arranged in an L shape.

6. The front compartment structure of a body-on-frame construction according to claim 5, wherein the connecting portion is provided with an end surface facing a ground; and the end surface is provided with a frame mounting structure configured to connect to a frame.

7. The front compartment structure of a body-on-frame construction according to claim 1, further comprising a dashboard cross beam, two ends of the dashboard cross beam being respectively connected to the A-pillars on two sides of a vehicle body.

8. The front compartment structure of a body-on-frame construction according to claim 7, wherein in a width direction of the vehicle body, a length of the radiator lower cross beam is less than a length of the dashboard cross beam.

9. A body-on-frame construction, comprising:
a frame and the front compartment structure according to any of claims 1 to 8, the trunk beam being provided with a frame mounting structure, and the frame being connected to the front compartment structure through the frame mounting structure.

10. A vehicle, comprising the body-on-frame construction according to claim 9.
